# EUROPEAN PATENT APPLICATION

(11) **EP 4 635 662 A1**
(43) Date of publication of application: **22.10.2025**
(21) Application number: 24170638.1
(22) Date of filing: 16.04.2024
(51) Int. Cl.: B23D 61/02, B24D 5/12, B23D 65/00

(54) **CUTTING DISK WITH AN INNER PLASTIC INLAY**

(71) Applicant: Hilti Aktiengesellschaft, 9494 Schaan (LI)
(72) Inventor: Kumar, Manish, 9486 Schaanwald (LI); Bartholomee, Ward, 89231 Neu-Ulm (DE); Hoop, Matthaeus, 9492 Eschen (LI); Granitzer, Thomas, 89278 Nersingen (DE)
(74) Representative: Hilti Aktiengesellschaft Corporate Intellectual Property

(57) **Abstract**

A cutting disk (30) configured to be connected to a power tool, comprising a metal disk (31), a plurality of cutting elements (32) connected to the metal disk (31), and an arbor hole (33) configured to be connected to the power tool, wherein the metal disk (31) includes an inner aperture (34) that is filled with a plastic inlay (35), wherein the plastic inlay (35) is connected to the metal disk (31).

## Description

### Technical field

The present invention relates to a cutting disk configured to be connected to a power tool according to the definition of claim 1.

### Background of the invention

WO 2021/204765 A1 discloses a cutting disk that is configured to be connected to a power tool. The cutting disk comprises a metal disk, a plurality of cutting elements connected to the metal disk, and an arbor hole configured to be connected to the power tool. To reduce the weight of the cutting disk, panels have been removed from the metal disk to leave apertures which extend through the thickness of the metal disk. The pattern of these apertures maintains structural strength whilst reducing the weight of the whole cutting disk.

To support health and safety, an operator should be protected from the effects of noise and/or vibration. Noise information and vibration values can be measured in accordance with a standardized test in accordance with EN 60745-1:2009 and EN 60745-2-22:2011. There is a need for cutting disks having a reduced noise level compared to the cutting disks known from WO 2021/204765 A1.

### Summary of the invention

The present invention has been made with the above-described background in mind, and it is, therefore, an object of the present invention to provide a weight-reduced cutting disk with a reduced noise level during cutting.

These objectives are achieved by realizing the features of the independent claims. Features which further develop the invention in an advantageous manner are described in the dependent claims.

According to an aspect of the invention, there is provided a cutting disk configured to be connected to a power tool, the cutting disk comprising a metal disk, a plurality of cutting elements connected to the metal disk, and an arbor hole configured to be connected to the power tool, characterized in that the metal disk includes an inner aperture that is filled with a plastic inlay, wherein the plastic inlay is connected to the metal disk.

Filling the inner aperture with a plastic inlay allows to reduce the noise level that is caused during cutting with cutting disks according to the present invention. The inner aperture allows to reduce the weight of the cutting disk, and the plastic inlay allows to reduce the noise level that is caused by the cutting disk during cutting.

The density of steel, which is commonly used to form the metal disc for cutting discs, is nearly seven times higher than plastic material. The inherent difference in the densities of steel and plastic is the main reason to fill aperture in the metal disk with a plastic inlay. Due to the discontinuity, unfilled apertures can marginally break sound waves generated during the cutting application, but the sound waves can still travel through the continuous part of the metal discs. By filling the inner aperture with a plastic inlay, the energy of the sound waves is absorbed in the deformation of the plastic inlay, attributed to lower density, and thus leading to lower noise generation compared to cutting discs with unfilled apertures known from prior art.

The plastic inlay, which fills the inner aperture, can be made of any type of plastic material. The plastic material will be adapted to the application of the cutting disk and the specific requirements. Due to their well-known properties, plastic materials made of polyamides (PA), particularly made of fiber-reinforced polyamides, are preferred to be used as the plastic inlay. The form of the inner aperture and of the plastic inlay will be adapted to the application of the cutting disk and the specific requirements.

The concept of the (hybrid) cutting disk according to the present invention can be used in combination with any metal disk, any arbor hole, any type of cutting element, and any type of connection between the cutting element and the metal disk. The metal disk is necessary if cutting elements, such as sintered cutting segments including abrasive particles, should be connected by welding.

In a preferred embodiment, the inner aperture is encased by a border strip having a thickness smaller than the thickness of the metal disk. A border strip, which encases the inner aperture and has a thickness smaller than the thickness of the metal disk, allows to fill the inner aperture without any protrusion of the plastic inlay with respect to the metal disk. If the plastic inlay would protrude with respect to the metal disk, the plastic inlay would be abraded during cutting as long as the plastic inlay fits with the width of the cutting elements.

Preferably, the border strip includes one or more interlocking elements. The interlocking elements in the border strips allow a strong connection between the plastic inlays and the metal disk. The form and the pattern of the interlocking elements will be adapted to the application of the cutting disk and the specific requirements. The interlocking elements can be formed as clearance holes having the same thickness as the border strip and/or as blind holes having a reduced thickness compared to the border strip.

Preferably, the interlocking elements are formed as clearance holes. Interlocking elements formed as clearance holes having the same thickness as the border strip allow a strong connection between the plastic inlay and the metal disk. The form and the pattern of the clearance holes will be adapted to the application of the cutting disk and the specific requirements.

In a preferred embodiment, the plastic inlay is made from polyamides. Using polyamides to create the plastic inlay that fill the inner aperture allows to reduce the noise level that is caused during cutting with cutting disks according to the present invention. Polyamides have high strength and stiffness, excellent impact resistance and good abrasion and wear resistance. Due to their properties, polyamides are qualified to fill the inner aperture and to connect the plastic inlay with the metal disk.

Preferably, the plastic inlay is made from fiber-reinforced polyamides. Using fiber-reinforced polyamides to create the plastic inlay that fills the inner aperture allows to reduce the noise level that is caused during cutting with cutting disks according to the present invention. By reinforcing polyamides with fibers, properties of the polyamides, such as strength, elastic modulus, and continuous operating temperature, can increase. Due to their properties, fiber-reinforced polyamides are qualified to fill the inner aperture and to connect the plastic inlay with the metal disk.

In a preferred embodiment, the plastic inlay is connected to the metal disk via over-molding or potting. Connecting the plastic inlay to the metal disk via over-molding or potting allows to create a strong connection between the plastic inlay and the metal disk. Preferably, the plastic inlay and the connection of the plastic inlay and the metal disk can be manufactured via injection molding.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIGS. 1A, B: show a power tool formed as cut-off saw that is connected to a cutting disk in a connected state (FIG. 1A) and in an unconnected state (FIG. 1B) of the cutting disk,
- FIGS. 2A, B: show a first embodiment of a cutting disk according to the present invention, the cutting disk including an inner aperture filled with a plastic inlay,
- FIGS. 3A, B: show a second embodiment of a cutting disk according to the present invention, the cutting disk including an inner aperture filled with a plastic inlay,
- FIG. 4: shows in detail the cutting disk of FIG. 2B in a cross-section, the inner aperture being encased by a border strip that includes an interlocking element arranged in the border strip.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

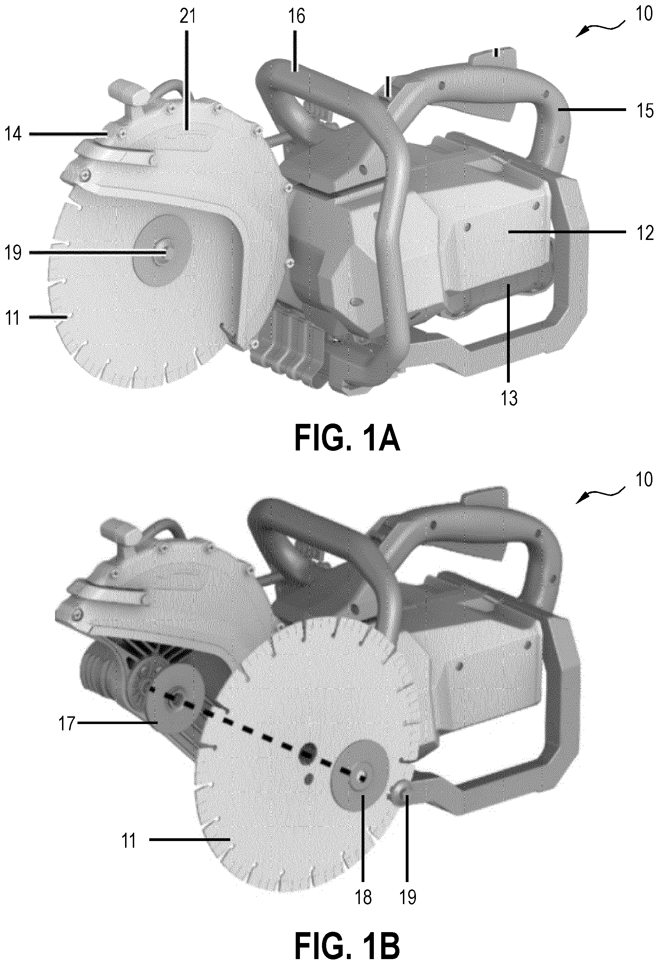

**FIGS. 1A****, B** show a power tool **10** and a cutting disk **11** that is connected to the power tool 10. The power tool 10 is a handheld cordless cut-off saw that is designed for cutting applications (indoor and outdoor, wet and dry) of mineral or metallic construction materials and asphalt with abrasive cut-off wheels or diamond cut-off wheels.

The term "power tool" refers to mains-operated (corded) power tools, battery-operated (cordless) power tools, and any other type of power tools, such as gas- or petrol-driven power tools. The term "cutting disk" refers to all disk-shaped tool inserts designed for cutting applications, such as diamond cut-off wheels in accordance with EN 13236, abrasive cut-off wheels, and bonded reinforced cut-off wheels in accordance with ISO 603-15 and ISO 603-16.

The cut-off saw 10 comprises a motor housing **12** with an electric motor (not shown), a battery pack **13,** and a guard **14.** The cutting disk 11 is surrounded by the guard 14, which serves to protect the operator from flying dust particles and reduces the risk of injury posed by the operator reaching into the rotating cutting disk 11. For operating the cut-off saw 10, the cut-off saw 10 must be hold securely with both hands on the defined grips, a main grip **15** and a front grip **16.**

FIG. 1A shows the cut-off saw 10 with the cutting disk 11 connected to the power tool, and FIG. 1B shows in detail how the cutting disk 11 can be connected to the cut-off saw 10. The cutting disk 11 is connected to the cut-off saw 10 via a mounting flange **17,** a clamping flange **18,** and a securing screw **19.** The cutting disk 11 is positioned flush and centered on the mounting flange 17, wherein the direction of rotation of the cutting disk 11 must match a direction-of-rotation arrow **21.** The clamping flange 18 is positioned flush and centered and the securing screw 19 is installed with an assembly tool.

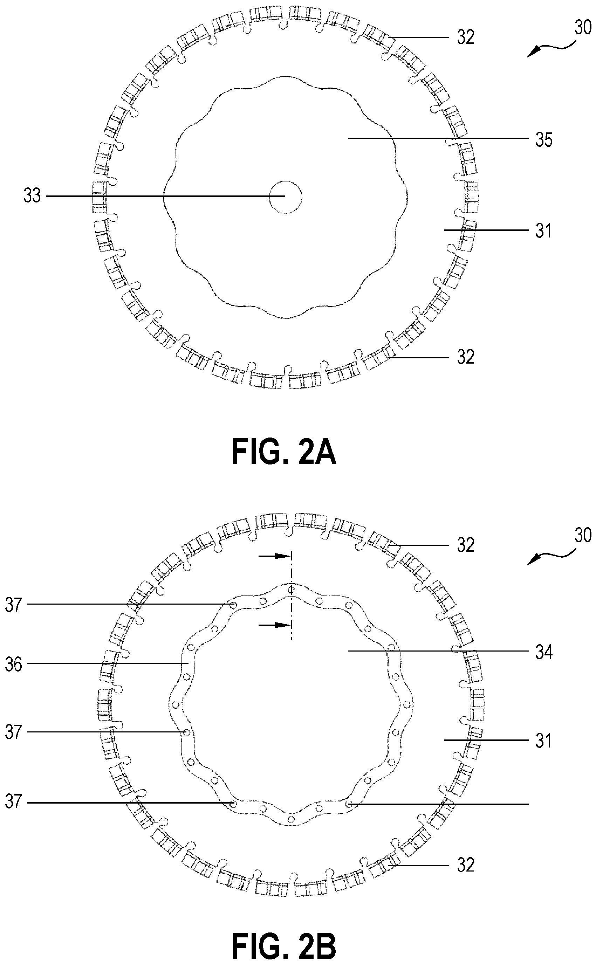

**FIGS. 2A****, B** show a first embodiment of a cutting disk **30** according to the present invention configured to be connected to a power tool, such as the cut-off saw 10 shown in FIGS. 1A, B. The cutting disk 30 can substitute the cutting disk 11 of the cut-off saw 10.

The cutting disk 30 comprises a metal disk **31,** a plurality of cutting elements **32** connected to the metal disk 31, an arbor hole **33,** an inner aperture **34,** and a plastic inlay **35** which fill the inner aperture 34. FIG. 2A shows the cutting disk 30 with the plastic inlay 35, and FIG. 2B shows the cutting disk 30 without the plastic inlay 35.

The plastic inlay 35, which fill the inner aperture 34, can be made of any type of plastic material. Due to their well-known properties, plastic materials formed as polyamides (PA), particularly formed as fiber-reinforced polyamides, are preferred to be used as the plastic inlay 35. Polyamides have high strength and stiffness, excellent impact resistance and good abrasion and wear resistance; the most important industrial representatives include the polyamide types of PA 6 and PA 66.

The inner aperture 34 is encased by a border strip **36.** The border strip 36 includes a plurality of interlocking elements **37.** In the exemplary version of FIG. 2B, the interlocking elements are formed as clearance holes which allow a strong connection between the plastic inlay 35 and the metal disk 31. The form of the clearance holes 37 and pattern of the clearance holes 37 can be adapted to the application of the cutting disk 30 and the specific requirements.

In the exemplary version, the clearance holes 37 comprise a generally circular form. The clearance holes 37 does not need to be generally circular, they may be elliptical, hexagonal, or have any other form. The size and form of the clearance holes 37 is selected such that the plastic material can flow properly through the clearance holes. The number of the clearance holes 37 is adapted to the required strength of the cutting disk 30. In order to achieve a smooth connection of the plastic inlay 35 to the metal disk 31, the clearance holes 37 can be uniformly distributed over the border strip 36.

In the exemplary version of FIG. 2, the metal disk 31 comprises a generally circular body and the plurality of cutting elements 32 is arranged peripherally around a circular outer circumference of the metal disk 31. The metal disk 31 does not need to be generally circular, it may be hexagonal, octagonal, decagonal, or indeed have any number of circumferentially extending sides. The metal disk 31 is typically made from steel, but any type of metal or any combination of metals can be used.

In the exemplary version, the arbor hole 33 comprises a generally circular form. The arbor hole 33 does not need to be generally circular, it may be hexagonal, octagonal, decagonal, or indeed have any number of circumferentially extending sides. The arbor hole 33 is configured to be connected to the power tool, such as the cut-off-saw, and the form of the arbor hole is adapted to a spindle of the power tool. The arbor hole 33 is arranged in the plastic inlay 35 and, in the connected state of the cutting disk 30, the arbor hole 33 made of plastic is in contact with a drive spindle of a power tool, which is usually made from steel.

In the exemplary version, the cutting elements 32 are formed as cutting segments composed of a sintered matrix material and a plurality of abrasive particles and are equi-angularly spaced around the outer circumference of the metal disk 31. The cutting segments 32 are connected to the metal disk 31 by welding or brazing; alternatively, the cutting segments may be connected to the metal disk in a releasable manner, such as screwing. Instead of cutting segments including abrasive particles, cutting elements including PCD (polycrystalline diamond) cutters or a cutting ring can be used and connected to the metal disk 31.

The concept of the (hybrid) cutting disk according to the present invention can be used in combination with any metal disk 31, any arbor hole 33, any type of cutting element 32, and any type of connection between the cutting element 32 and the metal disk 31.

The cutting disk 30 can be manufactured by a method for manufacturing a cutting disk configured to be connected to a power tool, the cutting disk including a metal disk, a plurality of cutting elements connected to the metal disk, an arbor hole configured to be connected to the power tool, an inner aperture arranged in the metal disk, and a plastic inlay that fills the inner aperture, the method comprising the steps:
▪ Creating the inner apertures 34 in the metal disk 31,
▪ Creating the border strip 36 and the interlocking elements 37 in the metal disk 31,
▪ Connecting the cutting elements 32 to the metal disk 31,
▪ Creating the plastic inlay 35, and
▪ Connecting the plastic inlay 35 to the metal disk 31.

The method for manufacturing a cutting disk according to the present invention comprises five steps which can be performed in different order. The method can be separated in three parts: Sheet metal working, connecting the cutting elements, and plastic working.

The metal disk is prepared by creating the inner aperture 34 and by creating the border strip 36 and the interlocking elements 37 in the metal disk 31. The sheet metal working can be performed by laser cutting, by milling, or by any other metal working process. The sheet metal working can be performed by a specialized sheet metal worker.

The cutting elements 32 must be connected to the metal disk 31. The connecting step can be performed before the plastic working or after the plastic working. The preferred order depends on the type of connection between the cutting elements 32 and the metal disk 31. In case the cutting elements 32 should be connected by welding, it is preferred to connect the cutting elements 32 before doing the plastic working in order to avoid any thermal deformation of the plastic inlay 35 during welding.

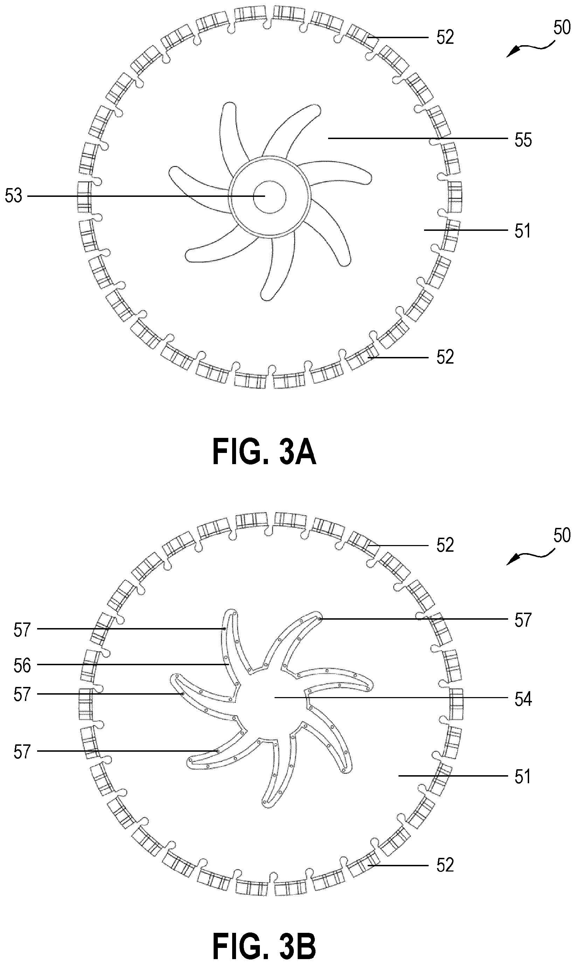

**FIGS. 3A****, B** show a second embodiment of a cutting disk **50** according to the present invention configured to be connected to a power tool, such as the cut-off saw 10 shown in FIGS. 1A, B. The cutting disk 50 can substitute the cutting disk 11 of the cut-off saw 10.

The cutting disk 50 comprises a metal disk **51,** a plurality of cutting elements **52** connected to the metal disk 51, an arbor hole **53,** an inner aperture **54,** and a plastic inlay **55** which fill the inner aperture 54. FIG. 3A shows the cutting disk 50 with the plastic inlay 55, and FIG. 3B shows the cutting disk 50 without the plastic inlay 55.

The arbor hole 53 is arranged in the plastic inlay 55 and, in the connected state of the cutting disk 50, the arbor hole 53 made of plastic is in contact with a drive spindle of a power tool, which is usually made from steel.

The plastic inlay 55, which fill the inner aperture 54, can be made of any type of plastic material. Due to their well-known properties, plastic materials formed as polyamides (PA), particularly formed as fiber-reinforced polyamides, are preferred to be used as the plastic inlay 55. Polyamides have high strength and stiffness, excellent impact resistance and good abrasion and wear resistance; the most important industrial representatives include the polyamide types of PA 6 and PA 66.

The inner aperture 54 is encased by a border strip **56.** The border strip 56 includes a plurality of interlocking elements **57.** In the exemplary version of FIG. 3B, the interlocking elements 57 are formed as clearance holes which allow a strong connection between the plastic inlay 55 and the metal disk 51. The form of the clearance holes 57 and pattern of the clearance holes 57 can be adapted to the application of the cutting disk 50 and the specific requirements.

In the exemplary version, the clearance holes 57 comprise a generally circular form. The clearance holes 57 do not need to be generally circular, they may be elliptical, hexagonal, or have any other form. The size and form of the clearance holes 57 is selected such that the plastic material can flow properly through the clearance holes. The number of the clearance holes 57 is adapted to the required strength of the cutting disk 50. In order to achieve a smooth connection of the plastic inlay 55 to the metal disk 51, the clearance holes 57 can be uniformly distributed over the border strip 56.

The concept of the (hybrid) cutting disk 50 can be used in combination with any metal disk 51, any arbor hole 53, any type of cutting element 52, and any type of connection between the cutting element 52 and the metal disk 51.

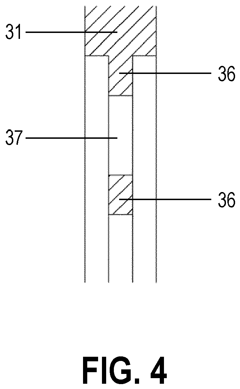

**FIG. 4** shows in detail the cutting disk 30 of FIG. 2B in a cross-section, the inner aperture 34 being encased by the border strip 36 that includes a plurality of the interlocking elements 37 arranged in the border strip 36.

The inner aperture 34 is encased by the border strip 36 that is formed as a recess with a reduced thickness compared to the thickness of the metal disk 31. The reduced thickness of the border strip 36 is necessary to allow that the inner aperture 34 can be filled with the plastic inlay 35 without any protrusion with respect to the metal disk 31.

The border strip 36 includes the plurality of interlocking elements 37 that are formed as clearance holes 37. The size and form of the clearance hole 37 is selected such that the plastic material can flow properly through the clearance hole 37. The clearance hole 37 allows a strong connection between the plastic inlay 35 and the metal disk 31.

The plastic inlay 35 that fill the inner aperture 34 can be made of any type of plastic material. Due to their properties, plastic materials formed as polyamides (PA), particularly formed as fiber-reinforced polyamides, are preferred to be used as the plastic inlay 35.

Polyamides have high strength and stiffness, excellent impact resistance and good abrasion and wear resistance; the most important industrial representatives include the polyamide types of PA 6 and PA 66. By reinforcing polyamides with fibers, properties of the polyamides, such as strength, elastic modulus, and continuous operating temperature, can increase.

## Claims

1. A cutting disk (30; 50) configured to be connected to a power tool (10), comprising:
▪ a metal disk (31; 51),
▪ a plurality of cutting elements (32; 52) connected to the metal disk (31; 51), and
▪ an arbor hole (33; 53) configured to be connected to the power tool (10),
**characterized in that** the metal disk (31; 51) includes an inner aperture (34; 54) that is filled with a plastic inlay (35; 55), wherein the plastic inlay (35; 55) is connected to the metal disk (31; 51).

2. The cutting disk of claim 1, wherein the inner aperture (34; 54) is encased by a border strips (36; 56) having a thickness smaller than the thickness of the metal disk (31; 51).

3. The cutting disk of claim 2, wherein the border strip (36; 56) includes one or more interlocking elements (37; 57).

4. The cutting disk of claim 3, wherein the interlocking elements are formed as clearance holes (37; 57).

5. The cutting disk of any one of claims 1 to 4, wherein the plastic inlay (35; 55) is made from polyamides.

6. The cutting disk of claim 5, wherein the plastic inlay (35; 55) is made from fiber-reinforced polyamides.

7. The cutting disk of any one of claims 1 to 6, wherein the plastic inlay (35; 55) is connected to the metal disk (31; 51) via over-molding or potting.
